# EUROPÄISCHE PATENTSCHRIFT

(11) **EP 1 317 893 B1**
(45) Veröffentlichungstag und Bekanntmachung des Hinweises auf die Patenterteilung: **23.11.2005**
(21) Anmeldenummer: 03005584.2
(22) Anmeldetag: 17.09.1999
(51) Int. Cl.: A47B 47/00, A47B 96/14

(54) **Profilanordnung zum Aufbau von Ausstellungs-oder Ladeneinrichtungen**
Extrusion arrangement to construct presentation or shop layouts
Arrangement de profilés pour construire des dispositions de présentation ou de magasins

(30) Priorität: 16.10.1998 DE 29818474 U
(43) Veröffentlichungstag der Anmeldung: 11.06.2003
(62) Teilanmeldung aus: 99118444.1
(73) Patentinhaber: OCTANORM-VERTRIEBS-GMBH FÜR BAUELEMENTE, 70794 Filderstadt (DE)
(72) Erfinder: Bruder, Hans, 72631 Aichtal-Aich (DE)
(74) Vertreter: Patentanwälte Ruff, Wilhelm, Beier, Dauster & Partner

(56) Entgegenhaltungen:
- DE-A- 1 654 726
- FR-A- 2 356 033
- GB-A- 2 040 672
- US-A- 3 877 138

## Beschreibung

Die Erfindung betrifft eine Profilanordnung zum Aufbau von Ausstellungs- oder Ladeneinrichtungen mit mindestens zwei mehreckigen Profilen und wenigstens einem Eckstück und einem Formstück wobei die Profile mit mindestens einer stirnseitig offenen Hohlkammer und unit mindestens zwei benachbarten Seitenflächen versehen und durch das Eckstück verbindbar sind, wobei von dem Eckstück Zapfen abstehen, die in die Hohlkammern eingreifen, wobei an mindestens zwei benachbarten Seitenflächen eine über die Profillänge durchgehende Ausnehmung vorgesehen ist und auch das Eckstück Ausnehmungen aufweist, wobei die Ausnehmung in den Profilen Teil einer beide Seitenflächen übergreifenden Vertiefung ist, die an beiden Rändern jeweils von einem Abschnitt der Seitenfläche übergriffen ist, wobei in diese Vertiefungen eine Leiste aus einem vom Material der Profile abweichenden Material einsetzbar ist, die ein Kantprofil mit einer zwischen zwei benachbarten und mit den Seitenflächen fluchtenden Außenflächen gebildete Kante ist.

Eine derartige Profilanordnung ist aus der britischen Offenlegungsschrift GB 2 040 672 A bekannt, die eine Aufbauanleitung für eine Glasvitrine enthält, die aus verschiedenen Profilen, verschiedenen Verbindungsstücken, Einlegeböden und Seitenteilen aufgebaut wird. Die Profile weisen stirnseitig offene Hohlkammern auf und sind mittels der Verbindungsstücke verbindbar, deren zapfenartig abstehende Seitenteile dazu in die Hohlkammern eingreifen. Die Profile weisen an wenigstens zwei benachbarten Seitenflächen Ausnehmungen auf, die sich über die gesamte Profillänge erstrecken. Das Verbindungs-stück weist ebenfalls Ausnehmungen für Spannschrauben auf, die zum Verspannen des jeweiligen Verbindungsstücks in den Hohlkammern, dienen. Die Verbindungsstücke werden bei der Montage der Glasvitrine vollständig in die Hohlkammern eingelassen und die Stoßkanten der Profile werden mittels einer Gehrung zwischen den aufeinandertreffenden Profilen realisiert.

Aus der EP 0 843 103 A2 ist eine Profilanordnung bekannt, bei der die dort vorgesehenen Profile auf ihren Seitenflächen mit Nuten versehen sind, in die z.B. Trennscheiben eingesetzt werden können, die in einem von vier Profilen gebildeten Rahmen gehalten werden. Die Profile selbst sind durch Eckstücke zusammengehalten, die mit geriffelten Zapfen in Durchgangsbohrungen der Profile eingeschlagen werden.

Die US-Patentschrift US 3,877,138 beschreibt eine Profilanordnung aus mehreckigen Profilen, die mittels Eckstücken verbindbar sind. Von den Eckstücken abstehende Verbindungsabschnitte werden mit Hohlkammern der Profile in Eingriff gebracht, die stirnseitig offen sind. An zwei benachbarten Seitenflächen der Profile erstreckt sich über die Länge der Profile eine durchgehende Ausnehmung. Weiterhin sind am Eckstück Ausnehmungen vorgesehen, die zur Arretierung der Verbindungsabschnitte in den Hohlkammern dienen.

Schließlich ist es aus der deutschen Offenlegungsschrift DE 1 654 726 bekannt, an wenigstens zwei benachbarten Seitenflächen eines Profils Ausnehmungen vorzusehen, die sich über die gesamte Profillänge erstrecken. Dabei sind die Ausnehmungen Teil einer beide Seitenflächen übergreifenden Vertiefung, die an beiden Rändern jeweils von einem Abschnitt der Seitenflächen übergriffen ist. In die Vertiefungen sind Leisten einsetzbar, die aus einem Material gefertigt sind, das vom Material der Profile abweichen kann. Die Leisten können als Kantprofile ausgebildet sein, die mit den beiden benachbarten Seitenflächen fluchtende Außenflächen aufweisen, die eine Kante bilden.

Es sind auch Profile bekannt (Newline System der Octanorm-Vertriebs-GmbH für Bauelemente, Filderstadt) die aus Leichtmetall bestehen und in verschiedener Oberflächenqualität angeboten werden, die von eloxiertem Aluminium bis zu farbig beschichteten Profilen reichen. Eine Vielfalt von Kombinationsmöglichkeiten wird dadurch geschaffen.

Der vorliegenden Erfindung liegt die Aufgabe zugrunde, die Vielfalt solcher Profile noch zu erweitern und eine Möglichkeit vorzusehen, Laden- oder Ausstellungseinrichtungen auch so zu gestalten, dass sie das Aussehen von mit Holz hergestellten Einrichtungen erhalten oder durch zusätzliche unterschiedliche Farbgebungen die Ästhetik verbessern.

Zur Lösung dieser Aufgabe wird bei einer Profilanordnung der eingangs genannten Art vorgesehen, dass das Eckstück an allen nicht mit Verbindungszapfen ausgerüsteten Seiten mit dem Querschnitt der Kantleisten entsprechenden Ausnehmungen versehen ist und dass in diese Ausnehmungen ein eine Ecke bildendes Formstück aus dem gleichen Material wie die Kantleisten passend eingesetzt ist.

Bei dieser Ausführungsform werden daher die Kanten nicht aus dem Material des Profils, sondern von jenem der eingesetzten Leiste, also beispielsweise von einer Holzleiste gebildet, die aber in der Verlängerung ihrer Seitenflächen in die metallischen Flächen des Profils übergeht, die als Streifen wirken. Bei dieser Ausführungsform kann das Eckstück als ein Würfel ausgebildet sein, der an allen nicht mit Zapfen ausgerüsteten Seiten mit dem Querschnitt der Leiste entsprechenden Ausnehmungen versehen ist, wobei in diese Ausnehmungen ein eine Ecke bildendes Formstück aus dem gleichen Material wie die Kantprofile passend eingesetzt ist.

Die Ecke eines Einrichtungsgegenstandes wird daher bei dieser Ausführungsform z.B. von einem Holzstück gebildet, das nach außen hin in metallische Flächen übergeht.

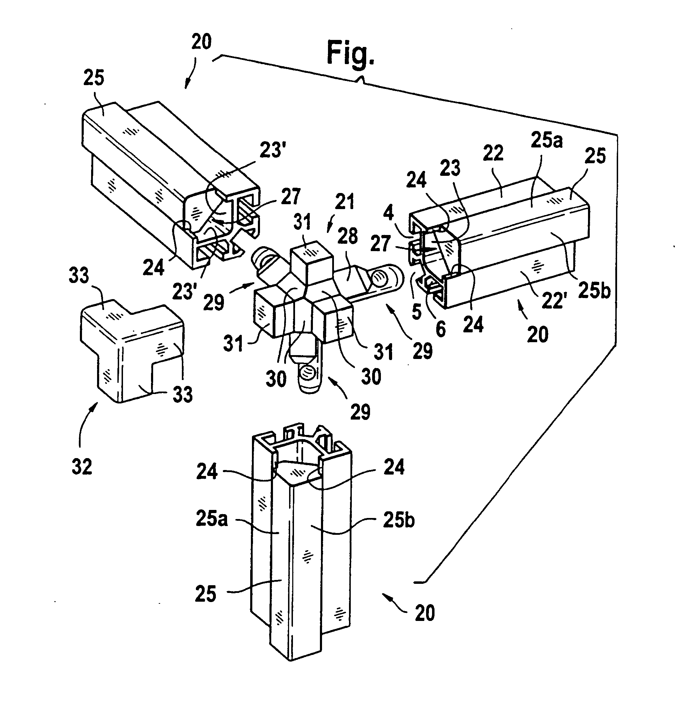

Die Erfindung ist anhand eines Ausführungsbeispieles in der Zeichnung dargestellt und wird im folgenden erläutert.

Die einzige Figur zeigt dabei eine Explosionszeichnung einer erfindungsgemäßen Profilanordnung, deren Profile mit einem anderen Eckstück zusammenfügbar sind.

Die Figur zeigt eine Ausführungsform von Profilen nach der Erfindung. In der Figur sind drei Leichtmetallprofile, insbesondere gezogene Aluminiumprofile 20, vorgesehen, die durch ein Eckstück 21 untereinander zu einer Winkelstruktur verbindbar sind. Die Profile 20 dienen dabei beispielsweise zur Herstellung von Vitrinen oder Schaukästen für Ladeneinrichtungen o.dgl. Die Aluminiumprofile weisen zwei unter 90° zueinanderstehende Seitenflächen 22, 22' und nach außen offene Hohlkammern 4, 5 und 6 auf. Die Seitenflächen 22 und 22' sind voneinander durch eine Vertiefung 23 mit zwei unter 90° zueinander stehenden Bodenflächen 23' unterbrochen, und diese seitlichen Bodenflächen 23' werden jeweils von einem Rand 24 der Seitenflächen 22 und 22' so übergriffen, dass jeweils eine Kantleiste 25 aus einem anderen Material als das, welches für die Herstellung der Profile 20 verwendet wurde, in die Vertiefung 23 passend eingeschoben werden kann. Die Kantleisten 25 können beispielsweise aus Holz bestehen, und sie geben daher dem Profil ein besonders ästhetisches Aussehen, das von den verbleibenden Metallkanten der Seitenflächen 22 und 22' mit der dazwischen liegenden Holzstruktur geprägt ist. Die Kantleiste 25 weist am Rand entsprechende Ausnehmungen auf, in die die Ränder 24 eingreifen, so dass die rechtwinklig zueinander angeordneten Außenflächen 25a und 25b der Kantleisten 25 fluchtend zu den verbliebenen Teilen der Seitenwände 22 und 22' des Profils 20 verlaufen. Die Eckstücke 21 sind mit abstehenden Verbindungszapfen 29 versehen, die in die Hohlkammern 5 eingesetzt und dort axial gesichert werden.

Die Kantleiste 25 weist auf ihrer Innenseite eine Abschrägung 27 auf, die einen Hohlraum mit etwa dreieckförmigem Querschnitt innerhalb der Ausnehmung 23 freilässt, um einen Teil 28 des zweiteiligen Verbindungszapfens 29 aufnehmen und die Verbindung des Eckstückes 21 mit den Profilen 20 sicher herstellen zu können.

Die Figur zeigt auch, dass das Eckstück 21 an den drei Seiten des im Prinzip würfelförmigen Aufbaues, die nicht mit den Verbindungszapfen 29 versehen sind, mit Ausnehmungen 30 versehen ist, die im Querschnitt jeweils den Kantleisten 25 entsprechen. Von der ursprünglichen Würfelform des Eckstückes 21 verbleiben daher nur noch drei quaderförmige Außenwandstücke 31, deren Flächen mit den Außenflächen eines Formstückes 32 fluchten, das passend auf das Eckstück 21 aufgesetzt wird, um mit seinen drei jeweils unter 90° zueinander abstehenden Armstummeln 33 in die Ausnehmungen 30 passend eingesetzt und dort entweder durch Verkleben oder dergleichen gehalten zu werden, oder so lang ausgebildet sind, dass die Enden dieser Armstummel 33 jeweils ein kleines Stück in die Ausnehmungen 23 der Profile 20 hereinragen, so dass das Formstück 32 in seiner Endlage auf dem Eckstück 21 nach dem Anschließen der Profile 20 an dieses Eckstück gehalten ist.

Bei dieser Ausführungsform wird die Ecke der so gebildeten Konstruktion von dem Formstück 32 gebildet, das aus dem gleichen Material wie die Kantleisten 25, d.h. also ebenfalls aus Holz, bestehen kann. Diese Holzecke setzt sich dann in drei Richtungen durch die Kantleisten 25 fort, die jeweils auf beiden Seiten von den Rändern der Seitenflächen 22 und 22' der Profile 20 begrenzt werden. Diese Ausgestaltung ergibt einen ästhetisch ansprechenden Effekt, der zum Aufbau von Ladeneinrichtungen oder auch von anderen Teilen eingesetzt werden kann. Die Kantleisten 25 müssen nicht unbedingt aus Holz bestehen, obwohl gerade dadurch besonders ästhetische Effekte erzielt werden können.

## Patentansprüche

1. Profilanordnung zum Aufbau von Ausstellungs- oder Ladeneinrichtungen mit mindestens zwei mehreckigen Profilen und wenigstens einem Eckstück (21) und Formstück (32), wobei die Profile mit mindestens einer stirnseitig offenen Hohlkammer (5) und mit mindestens zwei benachbarten Seitenflächen (22, 22') versehen und durch das Eckstück (21) verbindbar sind, wobei von dem Eckstück (21) Zapfen (29) abstehen, die in die Hohlkammern (5) eingreifen, wobei an mindestens zwei benachbarten Seitenflächen (22, 22') eine über die Profillänge durchgehende Ausnehmung (23) vorgesehen ist und auch das Eckstück Ausnehmungen aufweist, wobei die Ausnehmung (23) in den Profilen Teil einer beide Seitenflächen (22, 22') übergreifenden Vertiefung (23) ist, die an beiden Rändern jeweils von einem Abschnitt (24) der Seitenflächen (22, 22') übergriffen ist, wobei in diese Vertiefung (23) eine Leiste aus einem vom Material der Profile abweichenden Material einsetzbar ist, die ein Kantprofil (25) mit einer zwischen zwei benachbarten und mit den Seitenflächen (22, 22') fluchtenden Außenflächen (25a, 25b) gebildeten Kante ist
**dadurch gekennzeichnet,dass**
das Eckstück (21) an allen nicht mit Verbindungszapfen (29) ausgerüsteten Seiten mit dem Querschnitt der Kantleiste (25) entsprechenden Ausnehmungen (30) versehen ist und dass in diese Ausnehmungen ein eine Ecke bildendes Formstück (32) aus dem gleichen Material wie die Kantleisten (25) passend eingesetzt ist.

2. Profilanordnung nach Anspruch 1, **dadurch gekennzeichnet, dass** die Ausnehmung (23) mit zwei rechtwinklig aufeinanderstehenden Wandteilen (23') versehen ist und dass das Kantprofil (25) auf der diesen Wänden zugewandten Seite mit einer Abflachung (27) versehen ist, die im Abstand zu den Wänden (23') verläuft.

3. Profilanordnung nach Anspruch 1, **dadurch gekennzeichnet, dass** das Eckstück aus einem dem Querschnitt der Profile angepassten Würfel gebildet ist, an dem die Verbindungszapfen und die Ausnehmungen (30) angeordnet sind.

## Claims

1. Section arrangement for constructing exhibition or shop fittings having at least two polygonal sections and at least one corner piece (21) and one shaped part (32), the sections each provided with at least one hollow chamber (5) open at the front end and having at least two adjacent lateral faces (22, 22') and connectable by the corner piece (21), the corner piece (21) being provided with projecting tenons (29) for engaging in the hollow chambers (5), at least two adjacent lateral faces (22, 22') being provided with a recess (23) over the full section length and also the corner piece being provided with recesses, the recess (23) in the sections being part of a depression (23) overlapping both lateral faces (22, 22'), a part (24) of the lateral faces (22, 22') overlapping both edges of the depression, a strip made of a material differing from the material of the sections being insertable into the depression (23), the strip being a section (25) with edges having an edge formed between two adjacent outer faces (25a, 25b) flush with the lateral faces (22, 22'), **characterized in that** the corner piece (21) is provided with recesses (30) matching the cross-section of the strip (25) at all the faces not provided with connection tenons (29), and **in that** a shaped part (32) forming a corner made of the same material as the strips (25) is fitted into these recesses.

2. Section arrangement according to claim 1, **characterized in that** the recess (23) is provided with two orthogonally arranged wall parts (23'), and **in that** the section (25) with edges is provided with a flattening (27) on the side facing these walls and extending spaced to the walls (23').

3. Section arrangement according to claim 1, **characterized in that** the corner piece is formed from a cube matching the cross-section of the sections, provided with the connection tenons and recesses (30).

## Revendications

1. Arrangement de profilés pour construire des dispositions de présentation ou de magasins avec au moins deux profilés polygonaux et au moins un coin (21) et une platine (32), les profilés étant munis d'au moins une cavité (5) frontale ouverte et au moins deux surfaces latérales (22, 22') et peuvant être reliés par le coin (21), le coin (21) étant muni de tenons (29) en saillie qui s'engagent dans les cavités (5), au moins deux surfaces latérales (22, 22') adjacents étant munis d'un évidement (23) s'étendant sur toute la longeur du profilé et le coin aussi étant muni d'évidements, l'évidement (23) aux profilés étant partie d'une dépression (23) dépassant les deux surfaces latérales (22, 22'), une section (24) des surfaces latérales (22, 22') dépassant les deux bords de la depression, une baguette constituée d'un autre matériau que celui des profilés peut être insérée dans cette dépression (23), la baguette étant un profilé (25) avec des bords présentant une arête prévue entre deux faces extérieures (25a, 25b) adjacents et s'alignant sur les surfaces latérales (22, 22'), **caractérisé en ce que** le coin (21) est muni d'évidements (30) présentant une section transversale correspondant à celle du profilé (25) avec des bords sur toutes les surfaces dépourvues de tenons (29) de raccordement et **en ce que** une platine (32) formant un coin constituée d'un même matériau que celui des profilés (25) avec des bords est insérée dans ces évidements.

2. Arrangement de profilés selon la revendication 1, **caractérisé en ce que** l'évidement (23) est muni de deux parties de paroi (23') orthogonales l'une à l'autre et **en ce que** le profilé (25) avec des bords est muni d'un aplatissement (27) sur la face opposée aux parois, s'étendant à l'écart des parois (23').

3. Arrangement de profilés selon la revendication 1, **caractérisé en ce que** le coin est formé d'un cube conformé à la section transversale des profilés, auquel les tenons de raccordement et les évidements (30) sont disposés.
